# EUROPEAN PATENT APPLICATION

(11) **EP 2 214 028 A1**
(43) Date of publication of application: **04.08.2010**
(21) Application number: 10150939.6
(22) Date of filing: 18.01.2010
(51) Int. Cl.: G01P 5/20, G01S 17/58

(54) **Wind velocity measurement system**

(30) Priority: 30.01.2009 US 362595
(71) Applicant: General Electric Company, Schenectady, NY 12345 (US)
(72) Inventor: Wu, Juntao, Niskayuna NY New York 12309 (US); Zheng, Danian, Simpsonville SC South Carolina 29681 (US); Chen, Rui, Clifton Park NY New York 12065 (US); Lee, Boon Kwee, Clifton Park NY New York 12065 (US); Monk, David James, Rexford NY New York 12148 (US); Dolinsky, Sergei Ivanovich, Clifton Park NY New York 12065 (US); Yan, Weizhong, Clifton Park NY New York 12065 (US); Guida, Renato, Wyantskill NY new York 12198 (US)
(74) Representative: Bedford, Grant Richard

(57) **Abstract**

A wind anemometer (10) comprises a light source (12) for transmitting pulsed light signals (20), a receiver (14) for receiving backscattered signals (28) from airborne particles for each pulse of the transmitted pulsed light signals (20), a detector (16) for detecting the received backscattered signals, and a processor (18) to determine location of the airborne particles (32) with respect to the anemometer (10) based on the detected backscattered signals (38). The processor estimates wind velocity using changes in location of the airborne particles over at least one time interval.

## Description

The subject matter disclosed herein relates generally to wind velocity measurements and, more particularly, to a light-based method and system of measuring wind velocities and directions.

Wind velocity measurements are required for applications such as wind turbine control, detection of wind shear at airports, and determination of wind speed of moving aircraft, etc. There are several methods to measure wind velocity. Cup anemometers determine local wind velocities by measuring rotational speed of cups. Local wind velocities can be measured in advance using radio detection and ranging systems (radar), sonic detection and ranging systems (sodar), and light detection and ranging systems (lidar).

Radar systems require complicated equipment and are relatively expensive while sodar systems have shorter ranges and less reliability. Lidar (light detection and ranging) systems typically use Doppler shift of laser signals reflected from airborne particulates for measuring wind velocities. Measuring the Doppler shift in light frequency induced by moving particulates requires sophisticated and expensive equipment for laser transmission and Doppler shift detection. Namely, very narrow line-width, highly stable lasers, and either optical heterodynes or high-resolution optical filters are required.

It would therefore be desirable to provide a cost-effective and efficient light-based wind anemometer for measuring wind velocities.

In accordance with one embodiment of the present invention disclosed herein, a wind anemometer comprises a light source for transmitting pulsed light signals, a receiver for receiving backscattered signals from airborne particles for each pulse of the transmitted pulsed light signals, a detector for detecting the received backscattered signals, and a processor to determine location of the airborne particles with respect to the anemometer based on the detected backscattered signals. The processor estimates wind velocity using changes in location of the airborne particles over at least one time interval.

In accordance with another embodiment disclosed herein, a system for measuring wind velocity comprises a plurality of wind anemometers aimed in multiple directions to determine three-dimensional wind velocity. Each of the wind anemometers comprises a light source for transmitting pulsed light signals, a receiver for receiving backscattered signals from airborne particles for each pulse of the transmitted pulsed light signals, a detector for detecting the received backscattered signals, and a processor to determine location of the airborne particles with respect to the anemometer based on the detected backscattered signals and estimate wind velocity using changes in location of the airborne particles over time intervals.

In accordance with another embodiment disclosed herein, a method of measuring wind velocity comprises transmitting pulsed light signals, receiving backscattered signals from airborne particles for each pulse of the transmitted pulsed light signals, detecting the received backscattered signals, and determining location of the airborne particles based on the detected backscattered signals and estimating wind velocity using changes in location of the airborne particles over time intervals.

In accordance with another embodiment disclosed herein, a wind anemometer comprises a light source for transmitting pulsed light signals, a detector system for receiving backscattered signals from airborne particles for each pulse of the transmitted pulsed light signals and for detecting the received backscattered signals, and a processor to determine location of the airborne particles with respect to the anemometer based on the detected backscattered signals and estimate wind velocity using changes in location of the airborne particles over at least one time interval.

Various features, aspects, and advantages of the present invention will become better understood when the following detailed description is read with reference to the accompanying drawings in which like characters represent like parts throughout the drawings, wherein:
FIG. 1 illustrates a wind anemometer in accordance with aspects disclosed herein.
FIG. 2 illustrates the wind anemometer having separate optical paths in accordance with aspects disclosed herein.
FIG. 3 shows a graphical representation of processed backscattered signals in accordance with aspects disclosed herein.
FIG. 4 illustrates the wind anemometer employing a scanning mechanism in accordance with aspects disclosed herein.
FIG. 5 illustrates an embodiment where multiple wind anemometers are integrated in accordance with aspects disclosed herein.
FIG. 6 shows another embodiment of graphical representation of processed backscattered signals in accordance with aspects disclosed herein.
FIG. 7 illustrates a wind turbine with the wind anemometer mounted on nacelle in accordance with aspects disclosed herein.
FIG. 8 illustrates a met mast with the wind anemometer in accordance with aspects disclosed herein.
FIG. 9 illustrates a flowchart of a method of measuring wind velocity in accordance with aspects disclosed herein.

Various embodiments disclosed herein include a light-based wind anemometer and a light-based method for measuring wind velocities. The wind anemometer includes a light source for transmitting pulsed light signals, a receiver for receiving backscattered signals from airborne particles, a detector for detecting the received backscattered signals, and a processor to estimate wind velocity. The processor determines location of the airborne particles with respect to the anemometer and estimates wind velocity using changes in location of the airborne particles over time intervals. As used herein, singular forms such as "a," "an," and "the" include plural referents unless the context clearly dictates otherwise.

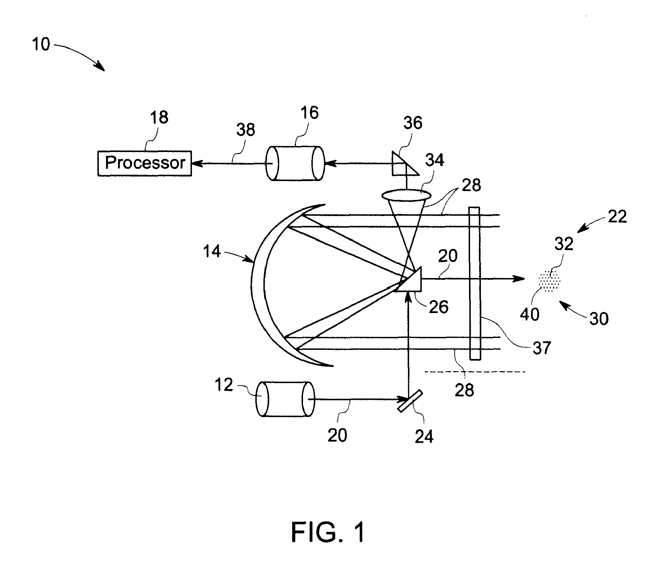

FIG. 1 illustrates an embodiment of the wind anemometer 10. The wind anemometer 10 includes a light source 12, a receiver 14, a detector 16, and a processor 18. The light source 12 is adapted to transmit pulsed light signals 20. Each pulse of the transmitted light signals 20 corresponds to a particular time. Therefore, there will be a time difference between any two transmitted light signals 20. In one embodiment, a pulsed light emitting diode (LED) is used as the light source 12 to transmit pulsed light signals. In another embodiment, the pulsed light signals 20 include pulsed laser signals where a laser diode is used as the light source.

The pulsed light signals 20 can be directed toward an area of interest 22 using optical elements. In one embodiment, a first optical element 24 directs a respective pulsed light signal 20 toward a second optical element 26. The second optical element 26 directs the pulsed light signal 20 toward an area of interest 22. As an example, the first optical element 24 can include a reflector plate and the second optical element 26 can include a prism or mirror.

Each pulse of the transmitted pulsed light signals 20 is backscattered from airborne particles. In one embodiment, the backscattered signals 28 include signals backscattered from a concentration 30 of airborne particles 32. The receiver 14 receives the backscattered light signals 28 for each pulse of the transmitted pulsed light signals 20. In one embodiment, the receiver 14 includes a collecting mirror that receives backscattered light signals 28. Both the transmitting pulsed light signals 20 and the received backscattered signals 28 share a common optical path that is represented as the portion between the dotted lines in FIG. 1.

A series of optical elements including the second optical element 26, a lens 34 and a third optical element are used to direct the backscattered light signals toward the detector. The collecting mirror receiver 14 includes a curvature to direct the backscattered light signals 28 toward the second optical element 26. The second optical element 26 directs the backscattered light signals 28 toward a focusing optics or a filter such as a lens 34. The lens 34 focuses the backscattered light signals 28 towards a third optical element 36. The third optical element 36 directs the backscattered light signals 28 toward the detector 16.

The anemometer can further include a transparent cover 37. In one embodiment (not shown), the first optical element 24 and third optical element 36 can be excluded from the anemometer. The light source 20 can transmit the pulsed light signals 20 directly toward second optical element 26 and the lens 34 directly focuses the backscattered light signals 28 toward the detector 16.

The detector 16 detects the received backscattered signals 28 by converting backscattered light signals into electrical signals. In one embodiment, an avalanche photodiode detector is used as the detector 16. Alternately, the detector 16 can include a photomultiplier tube, a pin photodiode, a Geiger mode avalanche photodiode, or an array of avalanche photodiode detectors or Geiger mode avalanche photodiodes. Although the receiver 14 and the detector 16 are shown as separate components, the functionalities of the receiver and the detector can be combined to have an integrated detector system for receiving and detecting the backscattered signals.

A processor 18 processes the detected backscattered signals 38 to determine location of the airborne particles 32 with respect to the anemometer. The processor 18 determines location of the airborne particles 32 for each pulse of the transmitted pulsed light signals 20 based on time from the release of the light signal to the receipt of the backscattered signal. Specifically, the processor 18 determines the distance between a concentration 30 of the airborne particles 32 and the anemometer 10 for each pulse of the transmitted pulsed light signals 20. The processor 18 then estimates wind velocity using changes in location of the airborne particles 32 over time intervals. In one embodiment, a leading edge 40 of the airborne particles 32 is used as a reference point to estimate wind velocity. The processor can operate in analog mode or digital mode.

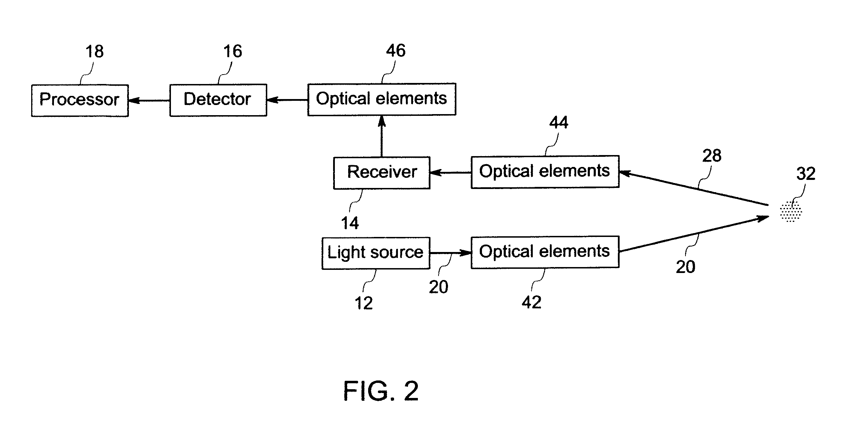

In another embodiment as shown in FIG. 2, the transmitting pulsed light signals 20 and the received backscattered signals 28 have separate optical paths. The backscattered signals have a separate optical path. The transmitting pulsed light signals 20 are made to pass through a first set of optical elements 42 and the received backscattered signals 28 are made to pass through a second set of optical elements 44.

A third set of optical elements 46 can be used to direct the backscattered light signals 28 toward the detector.

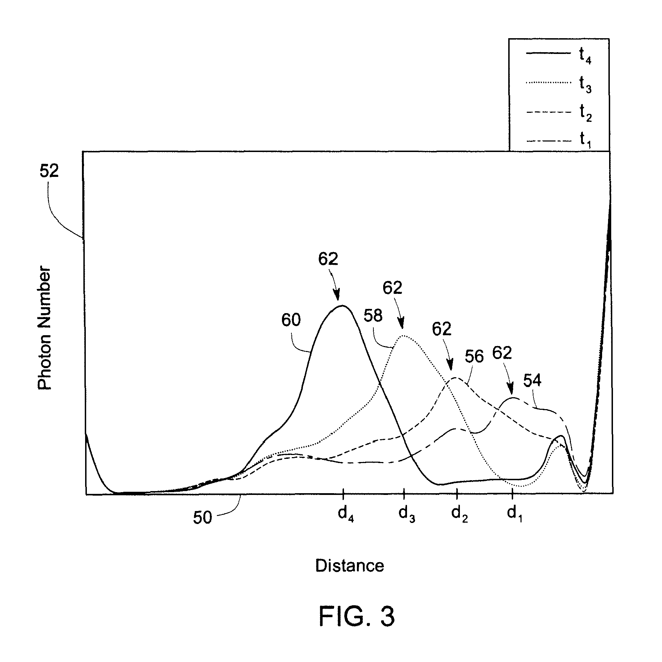

Referring to FIG. 3, backscattered light signals processed by the processor are graphically represented to explain the wind velocity estimating process in detail. Distance between the airborne particles and the anemometer is represented on X-axis 50 and photon number is represented on Y-axis 52. Each processed backscattered light signal represents a distance profile corresponding to a particular pulse of the transmitted pulsed light signals. Each point on the distance profile represents a distance between a concentration of the airborne particle and the anemometer. For explanatory purposes, four processed backscattered light signals corresponding to four pulses of the transmitted pulsed light signals are shown in the figure. A first processed signal 54 corresponds to a pulse transmitted at time "t₁", a second processed signal 56 corresponds to a second pulse transmitted at time "t₂", a third processed signal 58 corresponds to a third pulse transmitted at time "t₃", and a fourth processed signal 60 corresponds to a fourth pulse transmitted at time "t₄".

In one embodiment, the peak of each processed signal corresponds a leading edge of airborne particles. However, any signature or a pattern of the processed signal can be used in estimating wind velocity. In one embodiment, a centroid or other statistical descriptors of each processed signal is used to define the leading edge or a trailing edge of airborne particles. As cited previously, the leading edge 62 is used as a reference point to estimate the wind velocity. The leading edge of the airborne particles is at a distance "d₁" from the anemometer at time "t₁". Similarly, the leading edges are at a distances "d₂", "d₃", and "d₄" from the anemometer at times "t₂", "t₃", and "t₄", respectively.

The processor further estimates wind velocity by calculating distance traveled by the airborne particles in a time period between a pair of different times. For example, assuming the wind is blowing towards the anemometer, wind velocity can be calculated using distance traveled by the airborne particles between times "t₁" and "t₂". The distance traveled in a time period "t₂-t₁" will be "d₁-d₂". Therefore, wind velocity can be calculated as "(d₁-d₂)/(t₂-t₁)".

Wind velocities can be estimated by calculating distance traveled in a time period between any pair of different times. For example, wind velocity can be calculated using distance traveled between times "t₂" and "t₃", "t₃" and "t₄", "t₁" and "t₃", "t₂" and "t₄", or any other combination.

The time period between two consecutive pulses of the transmitted light signals can be selected to be very small, for example, in the order of nano seconds. The processor therefore estimates wind velocity by first calculating wind velocities for several time periods and those calculated wind velocities are then fused into a single number by statistical methods (e.g., averaging, median, etc).

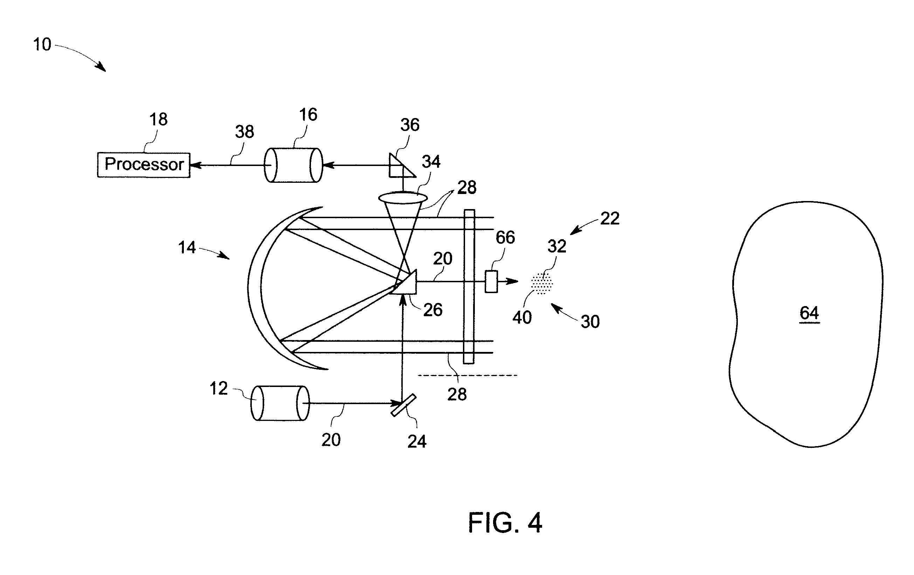

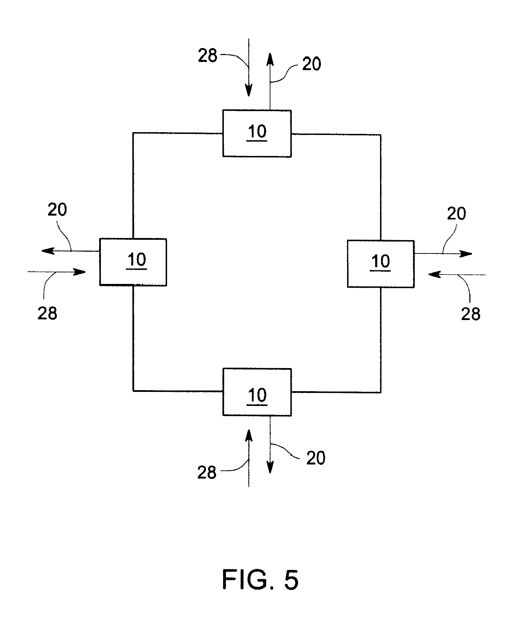

Multidimensional wind velocity information can be obtained by scanning the transmitted pulsed signals 20 over a region 64 using a scanning mechanism 66, as shown in FIG. 4. Alternately, as shown in FIG. 5, multiple wind anemometers 10 aimed in multiple directions can be integrated to measure wind velocity in multiple directions simultaneously and therefore obtain a three-dimensional wind velocity. The pulsed light signals 20 transmitted by each of the wind anemometers 10 can be of different or same wavelengths. By comparing the backscatter signals 28 at several angles, lateral and vertical components of wind velocity may be measured in addition to the component of velocity traveling toward a wind anemometer 10.

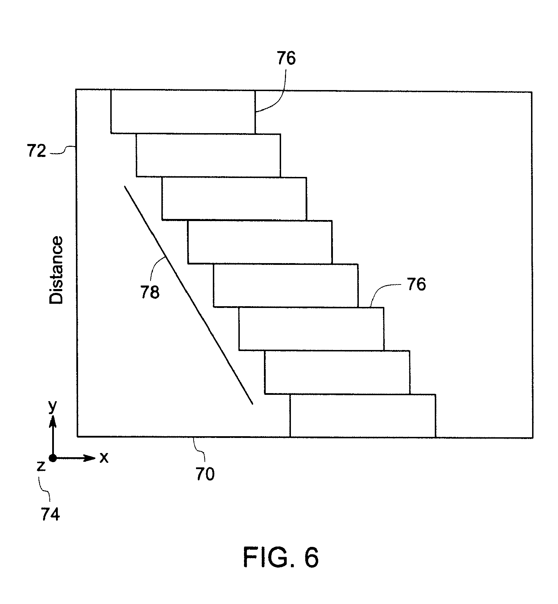

Referring to FIG. 6, another embodiment of processing backscattered light signals is graphically represented to explain the wind velocity estimating process. Time is represented on X-axis 70, distance between the airborne particles and the anemometer is represented on Y-axis 72 and photon number is represented on Z-axis 74. The distribution of airborne particles over time intervals is represented. Specifically, backscattered light signals from a concentration of airborne particle corresponding to particular transmitted pulsed light signals are processed and are represented by blocks 76. As the airborne particles move away from the anemometer, the distance between the airborne particles and the anemometer increases. By using appropriate image processing techniques, a line 78 can be generated using an edge, a centroid, or any point on the blocks 76 or reference to the blocks 76. The slope of this line 78, i.e. Δdistance/Δtime, yields the wind velocity.

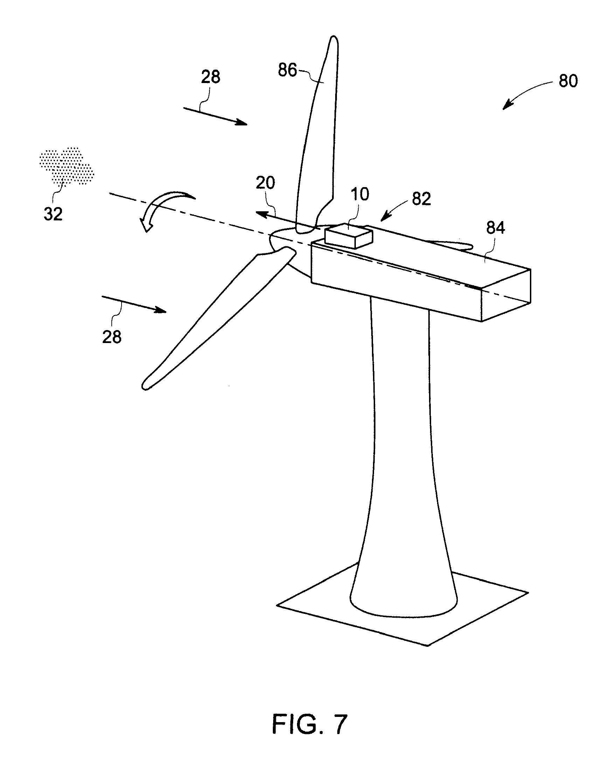

Referring to FIG. 7 the wind anemometer 10 can be mounted on a wind turbine 80 and associated with a wind turbine controller 82. The wind anemometer 10 can be placed on the nacelle 84 of the wind turbine 80. The wind anemometer 10 estimates wind velocity in front of the wind turbine 80 using backscattered signals from the airborne particles as described previously. Estimated wind velocities are provided to the wind turbine controller 82. The controller 82 continuously controls the wind turbine 80 based on the wind velocities by sending commands to adjust turbine rotor speed, pitch angles of rotor blades 86, turbine output power, or combinations thereof. Furthermore, the controller 82 can determine wake effect created at the back of the wind turbine 80 based on the estimated wind velocity. To reduce wake effect, the controller 82 can send commands to rotate the nacelle 84 to orient the rotor blades 86 to a particular direction.

The wind anemometer 10 can be mounted in a general horizontal orientation to transmit pulsed light signals 20 in front of the wind turbine 80 or in a general vertical orientation to transmit pulsed light signals 20 above the wind turbine 80. The wind anemometer 10 can be mounted in any orientation to transmit pulsed light signals 20 toward an area of interest.

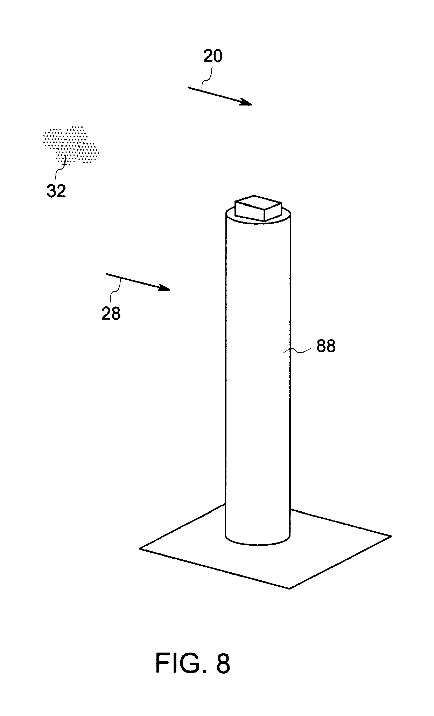

Referring to FIG. 8, the wind anemometer 10 can also be mounted on a met mast 88 or any tower. The wind velocity estimated by the anemometer 10 can be used for various purposes such as for wind turbine control.

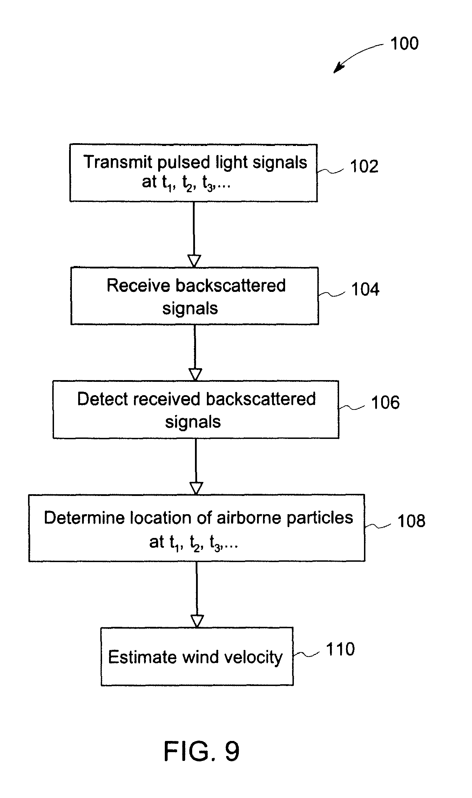

A flow chart of a method 100 of measuring wind velocity is shown in FIG. 9. Pulsed light signals are transmitted at different times (t₁, t₂, t₃, ...) at block 102. Backscattered light signals from airborne particles are received at block 104 for each pulse of the transmitted light signals. Received backscattered signals are detected at block 106. Locations of airborne particles at different times are determined at block 108 based on the detected backscattered signals. Wind velocity is estimated at block 110 using changes in location of the airborne particles over time intervals. Specifically, wind velocity is estimated by calculating the distance traveled by the airborne particles in a time period between a pair of different times. Distance traveled by the airborne particles is calculated using changes in location of the airborne particles.

The light based wind anemometer 10 and light-based method 100 of measuring wind velocity described above thus provide a way to estimate wind velocities using backscattered signals from the airborne particles without using Doppler effect phenomenon. The need for sophisticated equipment for Doppler shift detection is eliminated, resulting in reduced costs and simplified design. The wind anemometer can use conventional broad line-width light sources and optical filters for measuring wind velocities. The wind anemometer has applications in wind turbine control, gust detection, and detection of vortex effects left behind an airplane after take-off.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

For completeness, various aspects of the invention are now set out in the following numbered clauses:
1. A wind anemometer, comprising:
   a light source for transmitting pulsed light signals;
   a receiver for receiving backscattered signals from airborne particles for each pulse of the transmitted pulsed light signals;
   a detector for detecting the received backscattered signals; and
   a processor to determine location of the airborne particles with respect to the anemometer based on the detected backscattered signals and estimate wind velocity using changes in location of the airborne particles over at least one time interval.
2. The wind anemometer of clause 1, wherein a signature or a pattern of the airborne particles is used in estimating the wind velocity.
3. The wind anemometer of any preceding clause, wherein the signature comprises a leading edge or a trailing edge of the airborne particles, or a distribution of the airborne particles over at least one time interval.
4. The wind anemometer of any preceding clause, wherein the light source comprises at least one pulsed LED or at least one pulsed laser.
5. The wind anemometer of any preceding clause, wherein the detector comprises an avalanche photodiode detector, a Geiger mode avalanche photodiode, or an array of avalanche photodiode detectors or Geiger mode avalanche photodiodes.
6. The wind anemometer of any preceding clause, wherein the detector comprises a photomultiplier tube or a pin photodiode.
7. The wind anemometer of any preceding clause, further comprises a scanning mechanism to sweep pulsed light signals over a region.
8. The wind anemometer of any preceding clause, wherein the anemometer is mounted on or near a wind turbine or met mast.
9. The wind anemometer of any preceding clause, further comprises optical elements for directing the pulsed light signals and the received backscattered signals.
10. The wind anemometer of any preceding clause, wherein the transmitting pulsed light signals and the received backscattered signals share a common optical path.
11. The wind anemometer of any preceding clause, the transmitting pulsed light signals and the received backscattered signals have separate optical paths.
12. The wind anemometer of any preceding clause, wherein the processor operates in analog mode.
13. The wind anemometer of any preceding clause, wherein the processor operates in digital mode.
14. A system for measuring wind velocity, comprising:
   a plurality of wind anemometers aimed in multiple directions to determine three-dimensional wind velocity, each of the wind anemometers comprising:
      a light source for transmitting pulsed light signals;
      a receiver for receiving backscattered signals from airborne particles for each pulse of the transmitted pulsed light signals;
      a detector for detecting the received backscattered signals; and
      a processor to determine location of the airborne particles with respect to the anemometer based on the detected backscattered signals and estimate wind velocity using changes in location of the airborne particles over time intervals.
15. The system of any preceding clause, wherein the transmitted light signals from the wind anemometers can be of different or same wavelengths.
16. The system of any preceding clause, wherein a signature or a pattern of the airborne particles is used in estimating the wind velocity.
17. The system of any preceding clause, wherein the signature comprises a leading edge or a trailing edge of the airborne particles, or a distribution of the airborne particles over at least one time interval.
18. The system of any preceding clause, wherein the light source comprises at least one pulsed LED or at least one pulsed laser and the detector comprises a photomultiplier tube, a pin photodiode, an avalanche photodiode detector, a Geiger mode avalanche photodiode, or an array of avalanche photodiode detectors or the Geiger mode avalanche photodiodes.
19. The system of any preceding clause, wherein the wind velocity estimated from each of the wind anemometers is used to obtain three-dimensional wind velocity.
20. The system of any preceding clause, wherein the wind anemometers can be mounted on or near wind turbines or met masts.
21. The system of any preceding clause, further comprises optical elements for directing the pulsed light signals and the received backscattered signals.
22. A method of measuring wind velocity, comprising:
   transmitting pulsed light signals;
   receiving backscattered signals from airborne particles for each pulse of the transmitted pulsed light signals;
   detecting the received backscattered signals; and
   determining location of the airborne particles based on the detected backscattered signals and estimating wind velocity using changes in location of the airborne particles over time intervals.
23. The method of clause 22, further comprising directing the pulsed light signals and the received backscattered signals.
24. The method of clause 22 or 23, further comprising sweeping pulsed light signals over a region.
25. The method of any of clauses 22 to 24, wherein estimating wind velocity comprises using a signature or a pattern of the airborne particles.
26. A wind anemometer, comprising:
   a light source for transmitting pulsed light signals;
   a detector system for receiving backscattered signals from airborne particles for each pulse of the transmitted pulsed light signals and for detecting the received backscattered signals; and
   a processor to determine location of the airborne particles with respect to the anemometer based on the detected backscattered signals and estimate wind velocity using changes in location of the airborne particles over at least one time interval.

## Claims

1. A wind anemometer (10), comprising:
a light source (12) for transmitting pulsed light signals (20);
a receiver (14) for receiving backscattered signals (28) from airborne particles for each pulse of the transmitted pulsed light signals (20);
a detector (16) for detecting the received backscattered signals; and
a processor (18) to determine location of the airborne particles (32) with respect to the anemometer (10) based on the detected backscattered signals (38) and estimate wind velocity using changes in location of the airborne particles over at least one time interval.

2. The wind anemometer (10) of claim 1, wherein a signature or a pattern of the airborne particles (32) is used in estimating the wind velocity.

3. The wind anemometer (10) of any preceding claim, wherein the signature comprises a leading edge (40) or a trailing edge of the airborne particles (32), or a distribution of the airborne particles (32) over at least one time interval.

4. The wind anemometer (10) of any preceding claim, wherein the light source (12) comprises at least one pulsed LED or at least one pulsed laser.

5. The wind anemometer (10) of any preceding claim, wherein the detector (16) comprises an avalanche photodiode detector, a Geiger mode avalanche photodiode, or an array of avalanche photodiode detectors or Geiger mode avalanche photodiodes.

6. The wind anemometer (10) of any preceding claim, wherein the detector (16) comprises a photomultiplier tube or a pin photodiode.

7. The wind anemometer (10) of any preceding claim, further comprising a scanning mechanism (66) to sweep pulsed light signals over a region.

8. The wind anemometer (10) of any preceding claim, wherein the anemometer (10) is mounted on or near a wind turbine (80) or met mast (88).

9. The wind anemometer (10) of any preceding claim, further comprising optical elements (42, 44, 46) for directing the pulsed light signals (20) and the received backscattered signals.

10. The wind anemometer (10) of any preceding claim, wherein the transmitting pulsed light signals (20) and the received backscattered signals (28) share a common optical path.
